# EUROPEAN PATENT APPLICATION

(11) **EP 4 841 548 A1**
(43) Date of publication of application: **18.11.2026**
(21) Application number: 26176860.0
(22) Date of filing: 06.05.2026
(51) Int. Cl.: G06Q 50/04, G06Q 10/06, G06Q 10/10

(54) **MANAGEMENT APPARATUS, MANAGEMENT METHOD, AND MANAGEMENT PROGRAM**

(30) Priority: 13.05.2025 JP 2025080265
(71) Applicant: Yokogawa Electric Corporation, Musashino-shi, Tokyo 180-8750 (JP)
(72) Inventor: KONISHI, Takumi, Musashino-shi, Tokyo, 180-8750 (JP)
(74) Representative: Winter, Brandl - Partnerschaft mbB

(57) **Abstract**

A management server (10) adds identification information on each physical unit (30) included in a modular plant (PS) to a digital file that defines a function of each of the physical units (30), and registers the digital file to which the identification information on each of the physical units (30) has been added in a distributed ledger (20) that is able to be shared by users of the modular plant (PS).

## Description

### FIELD

The present disclosure relates a management apparatus, a management method, and a management program.

### BACKGROUND

A module type package (MTP) technology is a technology that is used for a modularized system design, and mainly provides a digital definition for a module that has a specific function. The MTP technology integrates modules from different manufacturers, and enables efficient design and operation of the entire system (see, for example, U.S. Patent Application Publication No. 2023/0135714).

However, with the above described technology, it is difficult to improve the performance of an aggregate that is constituted by each element. For example, with the above described technology, uniqueness of a digital file, such as an MTP file, and an association relationship between physical units have not been sufficiently considered.

Accordingly, the present disclosure has been conceived in light of the circumstances described above and an object thereof is to improve the performance of an aggregate that is constituted by each element.

### SUMMARY OF THE INVENTION

According to an aspect of the embodiments, a management apparatus includes a processor, wherein the processor is configured to execute a process of adding identification information on each element included in an aggregate that is constituted by each of the elements to a digital file that defines a function of each of the elements, and registering the digital file to which the identification information has been added in a distributed ledger that is able to be shared by users of the aggregate.

According to an aspect of the embodiments, a management method that causes a computer to execute a process includes adding identification information on each element included in an aggregate that is constituted by each of the elements to a digital file that defines a function of each of the elements, and registering the digital file to which the identification information has been added in a distributed ledger that is able to be shared by users of the aggregate.

According to an aspect of the embodiments, a management program that causes a computer to execute a process includes adding identification information on each element included in an aggregate that is constituted by each of the elements to a digital file that defines a function of each of the elements, and registering the digital file to which the identification information has been added in a distributed ledger that is able to be shared by users of the aggregate.

### BRIEF DESCRIPTION OF THE DRAWINGS

FIG. 1 is a diagram illustrating a configuration example and a process example related to a plant management system according to an embodiment;
FIG. 2 is a block diagram illustrating an example of a configuration of each device included in the plant management system according to the embodiment;
FIG. 3 is a diagram illustrating one example of an MTP file storage unit included in a management server according to the embodiment;
FIG. 4 is a diagram illustrating one example of a UUID storage unit included in the management server according to the embodiment;
FIG. 5 is a diagram illustrating one example of an NFT storage unit included in the management server according to the embodiment;
FIG. 6 is a diagram illustrating one example of a blockchain database according to the embodiment;
FIG. 7 is a flowchart illustrating one example of the overall flow of the process performed in the plant management system according to the embodiment;
FIG. 8 is a flowchart illustrating one example of the flow of an acquisition control process performed in the plant management system according to the embodiment;
FIG. 9 is a flowchart illustrating one example of the flow of a generation control process performed in the plant management system according to the embodiment;
FIG. 10 is a flowchart illustrating one example of the flow of a registration control process performed in the plant management system according to the embodiment;
FIG. 11 is a flowchart illustrating one example of the flow of a management control process performed in the plant management system according to the embodiment; and
FIG. 12 is a diagram illustrating an example of a hardware configuration according to the embodiment.

### DETAILED DESCRIPTION OF THE PREFERRED EMBODIMENTS

Hereinafter, preferred embodiments of a management apparatus, a management method, and a management program according to the present disclosure will be explained in detail below with reference to the accompanying drawings. Furthermore, the present disclosure is not limited to the embodiments described below.

In the following, a configuration and a process related to a plant management system 100 according to an embodiment, a configuration and a process related to each device included in the plant management system 100, a specific example of each process performed in the plant management system 100, the flow of each of the processes performed in the plant management system 100, and effects of the embodiment will be described.

### 1. Configuration and process related to plant management system 100

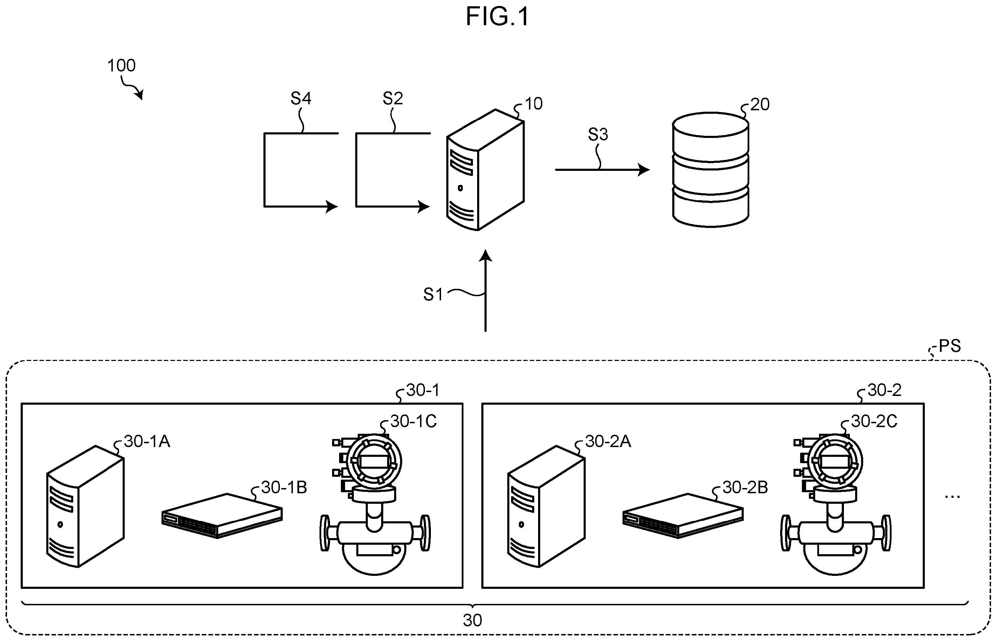

A configuration and a process related to the plant management system 100 according to the embodiment will be described with reference to FIG. 1. FIG. 1 is a diagram illustrating the configuration example and the process example related to the plant management system 100 according to the embodiment. In the following, an example of the overall configuration of the plant management system 100, an example of the overall process performed in the plant management system 100, and the effects of the plant management system 100 will be described.

### 1-1. Example of overall configuration of plant management system 100

An example of the overall configuration of the plant management system 100 will be described.

The plant management system 100 is constituted by a management server 10, a blockchain database 20, and a physical unit 30 (30-1, 30-2, and ... ). Here, the management server 10, the blockchain database 20, and the physical unit 30 are communicably connected one another via a predetermined communication network (not illustrated) in a wired or wireless manner. Moreover, various kinds of communication networks, such as the Internet or a dedicated line, may be used for the predetermined communication network.

### 1-1-1. Management server 10

The management server 10 is a management apparatus that manages a modular plant PS. For example, the management server 10 is implemented by a cloud environment, an on-premise environment, an edge environment, or the like. Furthermore, the management server 10 may be implemented by a desktop personal computer (PC), a notebook PC, a tablet terminal, a smartphone, or the like. Moreover, two or more of the management servers 10 may be included in the plant management system 100 illustrated in FIG. 1.

### 1-1-2. Blockchain database 20

The blockchain database 20 is a storage device that stores therein a blockchain that has been registered by the management server 10 as a distributed ledger. Moreover, the blockchain database 20 may be a configuration that is constituted by being integrated with the management server 10. Furthermore, two or more of the blockchain databases 20 may be included in the plant management system 100 illustrated in FIG. 1.

### 1-1-3. Physical unit 30

The physical unit 30 (30-1, 30-2, and ... ) is an element that constitutes the modular plant PS, and includes a plurality of plant devices. In the example illustrated in FIG. 1, the physical unit 30-1 constitutes a part of the modular plant PS, and is constructed by a control device 30-1A, a communication device 30-1B, a field device 30-1C, and the like. Furthermore, the physical unit 30-2 constitutes a part of the modular plant PS, and is constructed by a control device 30-2A, a communication device 30-2B, a field device 30-2C, and the like.

### 1-2. Example of overall process performed in plant management system 100

An example of the overall process performed in the plant management system 100 will be described. Moreover, the processes performed at Steps S1 to S4 described below may be performed in different order. Furthermore, some of the processes performed at Steps S1 to S4 described below may be omitted.

### 1-2-1. MTP file acquisition process

At a first step, the management server 10 performs an MTP file acquisition process (Step S1). For example, the management server 10 acquires an MTP file D-1 that is information that defines a function of the physical unit 30-1, and that serves as a digital file that includes design information, operation information, metadata, and the like related to the physical unit 30-1. Furthermore, the management server 10 acquires the MTP file D-2 that is the information that defines the function of the physical unit 30-2, and that serves as the digital file that includes design information, operation information, metadata, and the like related to the physical unit 30-2.

Here, the design information is the information that defines a design of each module that constitutes the physical unit 30. Furthermore, the operation information is the information that defines an operating condition that enables the physical unit 30 to operate. Furthermore, the metadata is device identification information related to each of the plant devices that constitutes the physical unit 30, the information related to a time stamp, and the like. Moreover, the digital file that is acquired by the management server 10 is not limited to the MTP file D as long as the digital file is data containing the design information, the operation information, the metadata, or the like.

Furthermore, the management server 10 may acquire a single piece of the MTP file D as the MTP file D that is associated with the physical unit 30, or may acquire a plurality of pieces of the MTP files D as the MTP files D that are associated with the physical unit 30.

### 1-2-2. NFT-ization process

At a second step, the management server 10 performs an NFT-ization process (Step S2). For example, the management server 10 generates a non-fungible token-1 (NFT-1) by adding, as the identification information on the physical unit 30-1, a universally unique identifier-1 (UUID-1) to the associated MTP file D-1, and outputting a hash value. Furthermore, the management server 10 generates, as the identification information on the physical unit 30-2, an NFT-2 by adding a UUID-2 to the associated MTP file D-2, and outputting a hash value.

### 1-2-3. Blockchain registration process

At a third step, the management server 10 performs a blockchain registration process (Step S3). For example, the management server 10 registers, as a distributed ledger, the generated NFT-1 and the NFT-2 in the blockchain that is stored in the blockchain database 20.

### 1-2-4. Data encryption process and access control process

At a fourth step, the management server 10 performs a data encryption process and an access control process (Step S4). For example, the management server 10 encrypts all of the pieces of data that are included in the MTP file D that is associated with each of the physical units 30 and included in the NFT by using an encryption algorithm. Furthermore, the management server 10 performs access control such that only a user who has specific authority is able to access the physical units 30 and the MTP files D.

### 1-2-5. Others

The management server 10 is able to periodically perform the above described processes at Steps S1 to S4. For example, in a case where some of the physical unit 30 that constitutes the modular plant PS is newly manufactured, maintained, arranged, or the like, the management server 10 is able to manage all of the histories of the physical units 30 that constitute the modular plant PS by performing the above described processes at Steps S1 to S4.

### 1-3. Effects of plant management system 100

In the following, the outline of and a problem in a plant management system 100-P according to a reference technology will be described, and then, the effects of the plant management system 100 according to the embodiment will be described.

### 1-3-1. Outline of plant management system 100-P

The plant management system 100-P according to the reference technology uses the MTP technology for a modularized system design, and mainly provides a digital definition of a module that has a specific function. As a result of this, in the plant management system 100-P, it is possible to integrate the modules from different manufacturers, and accordingly enable efficient design and operation of the entire system. In the plant management system 100-P, the MTP file D is generated as the digital file for defining a function (e.g.: a design, performance, etc.) of each of the modules.

Here, in the plant management system 100-P, uniqueness of the digital file, and an association relationship with each of the physical units 30 are not sufficiently considered. For example, the MTP file D is mainly based on a process flow and a functional requirement. Furthermore, in the MTP file D, a relationship with the physical unit 30 is not defined, so that it is difficult to track which of the physical units 30 is associated with which of the MTP files D.

### 1-3-2. Background of plant management system 100-P

In the plant management system 100-P according to the reference technology, the MTP files D are adopted as described above. Here, the MTP files D are just for logically defining a process flow, and are not a tool for ensuring an association with each of the physical units 30 and uniqueness. For that reason, in the plant management system 100-P, technical requirements for complicated traceability of the physical unit 30 and a genuineness determination are low, whereby leading to circumstances in which working efficiency at on site and product reliability are postponed. Furthermore, in the plant management system 100-P, a blockchain technology for securely managing the digital files has not been sufficiently widespread, which is one of the factors that the association relationship between the physical units 30 is ambiguous.

### 1-3-3. Problem in plant management system 100-P

The following problem is present in the plant management system 100-P according to the reference technology. In the following, a first problem related to a lack of uniqueness between the physical unit 30 and the MTP file D, a second problem related to a risk of duplication and tampering of the digital file, a third problem related to a lack of security management, and a fourth problem related to a lack of tracking of the physical unit 30 in real time will be described.

### 1-3-3-1. First problem

As the first problem, in the plant management system 100-P, there is a problem related to a lack of uniqueness between the physical unit 30 and the MTP file D. In other words, in the plant management system 100-P, the MTP file D that is the digital file and the physical unit 30 are not directly linked (associated), so that it is difficult to ensure the authenticity and the traceability of each of the modules. In particular, in the plant management system 100-P, in a case where the physical unit 30 is moved or is rearranged or in a case where maintenance of the module is needed, it is unclear which of the physical units 30 is associated which of the MTP files D, so that it is highly likely to occur a fraud or an error.

### 1-3-3-2. Second problem

As the second problem, in the plant management system 100-P, there is a problem related to a risk of duplication and tampering of the digital file. In other words, in the plant management system 100-P, the MTP file D serving as the digital file is able to be duplicated infinitely, so that it is difficult to distinguish between a legitimate module and a fraudulently duplicated module. As a result of this, in the plant management system 100-P, there is a risk that the reliability and the safety of the product may be compromised.

### 1-3-3-3. Third problem

As the third problem, in the plant management system 100-P, there is a problem related to a lack of security management. In other words, in the plant management system 100-P, a mechanism of access control and user authentication with respect to the MTP file D is not sufficient, and unauthorized use and tampering of data is likely to occur. In particular, in the plant management system 100-P, data is widely shared without introducing a private chain or an access restriction, so that there is a high risk of leakage of confidential information and data tampering.

### 1-3-3-4. Fourth problem

As the fourth problem, in the plant management system 100-P, there is a problem related to a lack of tracking in real time. In other words, in the plant management system 100-P, after management of the MTP file D has been generated once, the MTP file D is not updated or is not tracked, so that it is difficult to grasp the state or the maintenance history of the physical unit 30 in real time. As a result of this, in the plant management system 100-P, a decrease in efficiency of a manufacturing line or an unauthorized use of the physical unit 30 may possibly occur.

### 1-3-4. Outline of plant management system 100

In the plant management system 100 according to the embodiment, the following processes are performed. At a first step, the management server 10 acquires the MTP file D as the digital file that includes the design information, the operation information, the metadata, and the like of the physical unit 30. At a second step, the management server 10 generates an NFT after adding a UUID to the MTP file D as the identification information on each of the physical units 30. At a third step, the management server 10 registers, as a distributed ledger, the NFT in the blockchain that is stored in the blockchain database 20. At a fourth step, the management server 10 encrypts all of the pieces of data that are included in the MTP file D that is associated with each of the physical units 30 and included in the NFT stored in by using the encryption algorithm, and performs access control such that only the user who has specific authority is able to access the physical unit 30 and the MTP files D. At a fifth step, the management server 10 manages the history of the physical unit 30 that constitutes the modular plant PS in accordance with manufacturing, maintenance, a rearrangement, or the like of the physical unit 30.

### 1-3-5. Effects of plant management system 100

In the plant management system 100 according to the embodiment, the following effects are provided. In the following, a first effect related to ensuring of uniqueness of the physical unit 30 and the MTP file D, a second effect related to improvement of traceability and authenticity, a third effect related to tampering prevention of the digital file or the physical unit 30, a fourth effect related to a selection of a module and transparency of an arrangement, and a fifth effect related to tracking and management of the physical unit 30 performed in real time will be described.

### 1-3-5-1. First effect

Firstly, in the plant management system 100, there is the first effect related to ensuring of the uniqueness between the physical unit 30 and the MTP file D. In other words, in the plant management system 100, both of the physical unit 30 and the MTP file D are uniquely linked by using the UUID, the MTP file D is NFT-ized, and is then registered in the blockchain. As a result of this, in the plant management system 100, it is possible to prevent fraud duplication and tampering of the MTP file D that is associated with the physical unit 30.

### 1-3-5-2. Second effect

Secondly, in the plant management system 100, there is the second effect related to improvement of traceability and authenticity. In other words, in the plant management system 100, by utilizing the NFT associated with each of the physical units 30, it is possible to track the history of manufacturing, maintenance, a rearrangement, and the like of the module. As a result of this, in the plant management system 100, it is possible to improve traceability of the entire of the system by guaranteeing the authenticity and the reliability of the physical unit 30.

### 1-3-5-3. Third effect

Thirdly, in the plant management system 100, there is the third effect related to tampering prevention of the digital file and the physical unit 30. In other words, in the plant management system 100, a tampering risk with respect to the data stored in the MTP file D and the physical unit 30 is reduced by using an encryption technology that uses a blockchain and an NFT. As a result of this, in the plant management system 100, security of the system is enhanced, and it is thus possible to guarantee an accurate operation of the physical unit 30.

### 1-3-5-4. Fourth effect

Fourthly, in the plant management system 100, there is the fourth effect related to a selection of a module and transparency of an arrangement. In other words, in the plant management system 100, the selection of the module and an arrangement process are recorded by using NFT-ized data, and the transparency of each of the steps is improved. As a result of this, in the plant management system 100, it is possible to verify which module has been selected and arranged based on what criteria in a project, and it is thus possible to implement reliable process management.

### 1-3-5-5. Fifth effect

Fifthly, in the plant management system 100, there is the fifth effect related to tracking or management of the physical unit 30 performed in real time. In other words, in the plant management system 100, a state or a position of the physical unit 30, and the maintenance history are managed in real time by using the blockchain. As a result of this, in the plant management system 100, it is possible to implement efficient operation or maintenance by grasping a current operational status of the physical unit 30.

As described above, in the plant management system 100, it is possible to provide highly reliable and efficient system by ensuring the uniqueness between the physical unit 30 and the digital file, and greatly improving traceability, transparency, security, and the like. In other words, in the plant management system 100, it is possible to improve the performance of the plant.

### 2. Configuration and process related to each device included in plant management system 100

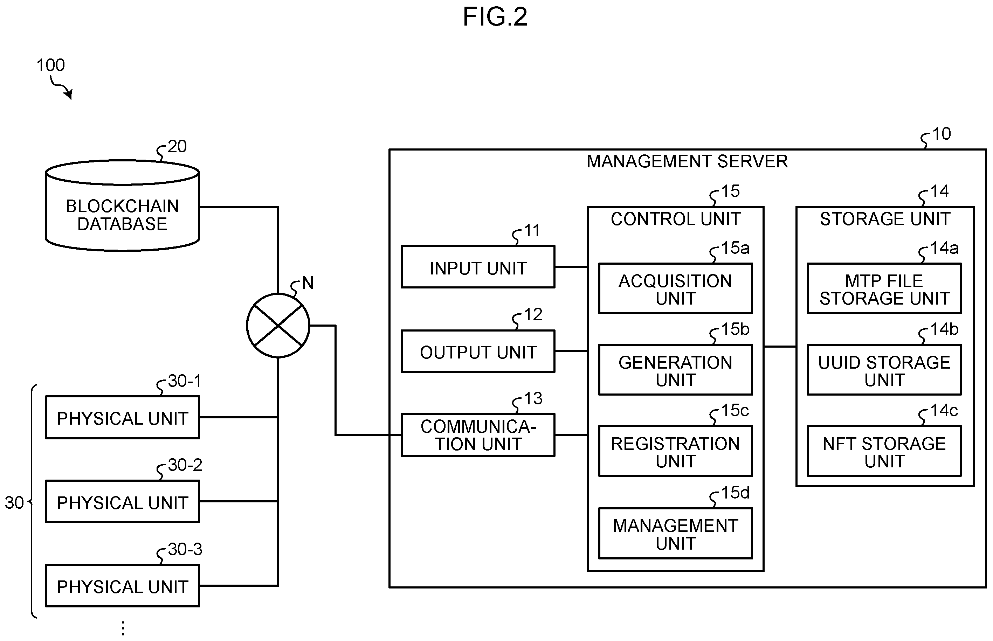

A configuration and a process related to each of the devices included in the plant management system 100 illustrated in FIG. 1 will be described with reference to FIG. 2 to FIG. 6. In the following, an example of the overall configuration of the plant management system 100 according to the embodiment, a configuration example and a process example related to the management server 10, a configuration example and a process example of the blockchain database 2, and a configuration example and a process example related to the physical unit 30 will be described.

### 2-1. Example of overall configuration of plant management system 100

The example of the overall configuration of the plant management system 100 illustrated in FIG. 1 will be described with reference to FIG. 2. FIG. 2 is a block diagram illustrating an example of a configuration of each of the devices included in the plant management system 100 according to the embodiment. As illustrated in FIG. 2, the plant management system 100 is constituted by the management server 10, the blockchain database 20, and the physical unit 30. Furthermore, the management server 10 is communicably connected by the communication network N that is implemented by the Internet, a dedicated line, or the like.

### 2-2. Configuration example and process example related to management server 10

The configuration example and a process example related to the management server 10 will be described with reference to FIG. 2. The management server 10 includes an input unit 11, an output unit 12, a communication unit 13, a storage unit 14, and a control unit 15.

### 2-2-1. Input unit 11

The input unit 11 manages an input of various kinds of information to the management server 10. For example, the input unit 11 is implemented by a mouse, a keyboard, a touch panel, or the like, and receives an input of various kinds of information to the management server 10.

### 2-2-2. Output unit 12

The output unit 12 manages an output of various kinds of information received from the management server 10. For example, the output unit 12 is implemented by a display, a speaker, or the like, and displays various kinds of information stored in the management server 10.

### 2-2-3. Communication unit 13

The communication unit 13 manages data communication performed with the other devices. For example, the communication unit 13 performs data communication with each of the communication devices via a router, or the like. Furthermore, the communication unit 13 is able to perform data communication with a terminal (not illustrated), or the like.

### 2-2-4. Storage unit 14

The storage unit 14 stores therein various kinds of information referred to by the control unit 15 when the control unit 15 operates, and various kinds of information that have been acquired when the control unit 15 operates. The storage unit 14 is constituted by an MTP file storage unit 14a, a UUID storage unit 14b, and an NFT storage unit 14c. Here, the storage unit 14 is implemented by, for example, a semiconductor memory device, such as a random access memory (RAM) or a flash memory, or a storage device, such as a hard disk or an optical disk. Moreover, in the example illustrated in FIG. 2, the storage unit 14 is installed in the management server 10; however, the storage unit 14 may be installed outside the management server 10, or a plurality of storage units may be installed.

### 2-2-4-1. MTP file storage unit 14a

The MTP file storage unit 14a stores therein the MTP file D. For example, the MTP file storage unit 14a stores therein the MTP file D that has been acquired by an acquisition unit 15a that will be described later and that is included in the control unit 15.

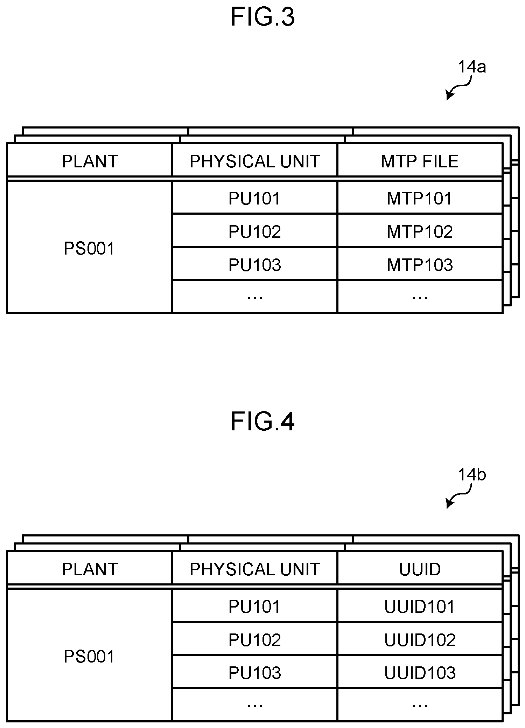

In the following, one example of the data stored in the MTP file storage unit 14a will be described with reference to FIG. 3. FIG. 3 is a diagram illustrating one example of the MTP file storage unit 14a included in the management server 10 according to the embodiment. In the example illustrated in FIG. 3, the MTP file storage unit 14a includes items, such as a "plant", a "physical unit", and an "MTP file".

The "plant" indicates identification information for identifying the modular plant PS that is the management target. For example, the "plant" is an identification number or an identification symbol of the modular plant PS. The "physical unit" is an element that constitutes the modular plant PS, and includes the plurality of plant devices. For example, the "physical unit" is constructed by each of the process modules, and is a plant facility, such as a reaction facility, a heating facility, a cooling facility, a molding facility, a cleaning facility, a mixing facility, a separation and purification facility, and a measurement facility. The "MTP file" is information that defines a function of the physical unit 30, and is a digital file that includes design information, operation information, metadata, and the like. For example, the "MTP file" includes, as the design information, information that defines the design of each of the modules that constructs the respective physical units 30. Furthermore, the "MTP file" includes, as the operation information, information that defines an operating condition that enables the physical unit 30 to operate. Furthermore, the "MTP file" includes, as the metadata, device identification information on each of the plant devices that is connected with the physical unit 30, information on a time stamp, or the like. Moreover, the "MTP file" is not limited to the MTP file D as long as the "MTP file" is data that includes the design information, the operation information, the metadata, or the like.

In other words, FIG. 3 illustrates an example in which the MTP file storage unit 14a stores therein data that is related to the modular plant PS identified by "PS001" and that is indicated by {physical unit: "PU101", MTP file: "MTP 101"}, {physical unit: "PU102", MTP file: "MTP 102"}, {physical unit: "PU103", MTP file: "MTP 103"}, ... and the like.

### 2-2-4-2. UUID storage unit 14b

The UUID storage unit 14b stores therein a UUID. For example, the UUID storage unit 14b stores therein the UUID that has been acquired by the acquisition unit 15a that will be described later and that is included in the control unit 15. Furthermore, the UUID storage unit 14b stores therein the UUID that has been generated by a generation unit 15b that will be described later and that is included in the control unit 15.

In the following, one example of the data stored in the UUID storage unit 14b will be described with reference to FIG. 4. FIG. 4 is a diagram illustrating one example of the UUID storage unit 14b included in the management server 10 according to the embodiment. In the example illustrated in FIG. 4, the UUID storage unit 14b includes items, such as a "plant", a "physical unit", and a "UUID". Moreover, the items of the "plant" and the "physical unit" are the same as those included in the MTP file storage unit 14a, and therefore, descriptions thereof will be omitted.

The "UUID" indicates identification information for identifying the physical unit 30. For example, the "UUID" is stated as a predetermined character string, such as "XXXXXXXX-XXXX-XXXX-XXXX-XXXXXXXXXXXX".

In other words, FIG. 4 illustrates an example in which the UUID storage unit 14b stores therein data that is related to the modular plant PS identified by "PS001" and that is indicated by {physical unit: "PU101", UUID: "UUID 101"}, {physical unit: "PU102", UUID: "UUID 102"}, {physical unit: "PU103", UUID: "UUID 103"}, ... and the like.

### 2-2-4-3. NFT storage unit 14c

The NFT storage unit 14c stores therein an NFT. For example, the NFT storage unit 14c stores therein the NFT that has been generated by the generation unit 15b that will be described later and that is included in the control unit 15.

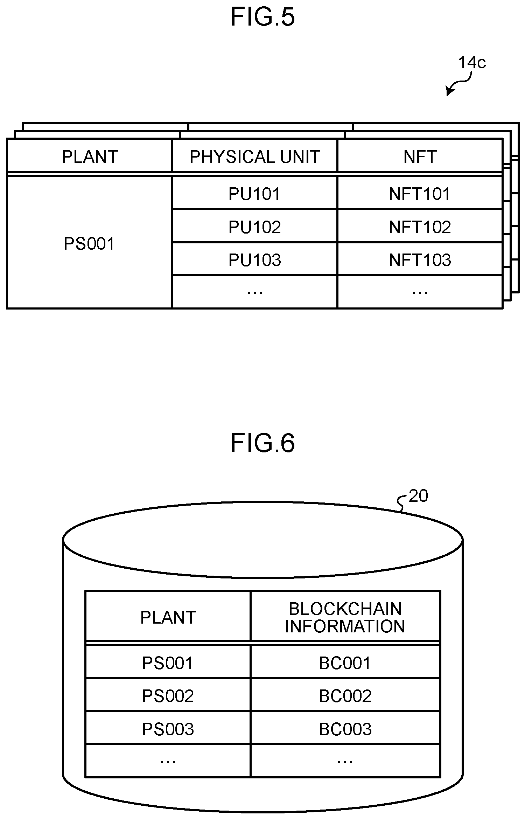

In the following, one example of the data stored in the NFT storage unit 14c will be described with reference to FIG. 5. FIG. 5 is a diagram illustrating one example of the NFT storage unit 14c included in the management server 10 according to the embodiment. In the example illustrated in FIG. 5, the NFT storage unit 14c includes items, such as a "plant", a "physical unit", and an "NFT". Moreover, the item of the "plant" and the "physical unit" are the same as those included in the MTP file storage unit 14a, and therefore, descriptions thereof will be omitted.

The "NFT" indicates information on an encrypted digital file that is associated with the physical unit 30. For example, the "NFT" is information obtained by adding a UUID as the identification information on the NFT, and hashing the digital file that includes the design information, the operation information, and the metadata as the MTP file D that is associated with the physical unit 30.

In other words, FIG. 5 illustrates an example in which the NFT storage unit 14c stores therein data that is related to the modular plant PS identified by "PS001" and that is indicated by {physical unit: "PU101", NFT: "NFT 101"}, {physical unit: "PU102", NFT: "NFT 102"}, {physical unit: "PU103", NFT: "NFT 103"}, ... and the like.

### 2-2-5. Control unit 15

The control unit 15 manages the overall control of the management server 10. The control unit 15 is constituted by the acquisition unit 15a, the generation unit 15b, a registration unit 15c, and a management unit 15d. Here, the control unit 15 is implemented by, for example, an electronic circuit, such as a central processing unit (CPU) or a micro processing unit (MPU), or an integrated circuit, such as an application specific integrated circuit (ASIC) or a field programmable gate array (FPGA).

### 2-2-5-1. Acquisition unit 15a

The acquisition unit 15a acquires various kinds of information. Moreover, the acquisition unit 15a stores the acquired various kinds of information in the storage unit 14. In the following, an MTP file acquisition control process and a UUID acquisition control process will be described.

### MTP file acquisition control process

The acquisition unit 15a performs the MTP file acquisition control process. For example, the acquisition unit 15a acquires the digital file that defines a function of each of the physical units 30 included in the modular plant PS. Furthermore, the acquisition unit 15a acquires the MTP file D that is the digital file that defines the function of each of the physical units 30. Furthermore, the acquisition unit 15a acquires the MTP file D that includes the design information that defines the design of each of the modules that constructs the respective physical units 30, the operation information that defines the operating condition that enables each of the physical units 30 to operate, or the metadata that is connected with each of the physical units 30. At this time, the acquisition unit 15a acquires, for example, the MTP file that is managed by a predetermined server, the MTP file that is stored in a predetermined database, a control device 30A (30-1A, 30-2A, and ... ) that is included in the physical unit 30, and the MTP file D that is generated by the other device.

The acquisition unit 15a acquires the digital file associated with manufacturing, maintenance, or a rearrangement of the physical unit 30. Furthermore, the acquisition unit 15a acquires the MTP file D associated with manufacturing, maintenance, or a rearrangement of the physical unit 30.

A specific example of the MTP file acquisition control process will be described. At a first step, the acquisition unit 15a acquires, as the MTP file D associated with the modular plant PS identified by "PS001", the data of {physical unit: "PU101", MTP file: "MTP 101"}, {physical unit: "PU102", MTP file: "MTP 102"}, {physical unit: "PU103", MTP file: "MTP 103"}, ... and the like from the predetermined server that manages the MTP file. At a second step, the acquisition unit 15a stores the acquired MTP file D in the MTP file storage unit 14a.

### UUID acquisition control process

The acquisition unit 15a performs the UUID acquisition control process. For example, the acquisition unit 15a acquires the identification information on each of the physical units 30 included in the modular plant PS. Furthermore, the acquisition unit 15a acquires the UUID that is the identification information on each of the physical units 30. At this time, the acquisition unit 15a acquires, for example, the UUID that is generated by the predetermined server.

A specific example of the UUID acquisition control process will be described. At a first step, the acquisition unit 15a acquires, as the UUID of the physical unit 30 included in the modular plant PS identified by "PS001", the data of {physical unit: "PU101", UUID: "UUID 101"}, {physical unit: "PU102", UUID: "UUID 102"}, {physical unit: "PU103", UUID: "UUID 103"}, ... and the like from the predetermined server that generates the UUID. At a second step, the acquisition unit 15a stores the acquired UUID in the UUID storage unit 14b.

### 2-2-5-2. Generation unit 15b

The generation unit 15b generates various kinds of information. Moreover, the generation unit 15b may store the generated various kinds of information in the storage unit 14. Furthermore, the generation unit 15b may refer to the various kinds of information that are stored in the storage unit 14. In the following, an MTP file generation control process, a UUID generation control process, and an NFT generation control process will be described.

### MTP file generation control process

The generation unit 15b performs the MTP file generation control process. For example, the generation unit 15b generates the digital file that defines the function of each of the physical units 30 included in the modular plant PS. Furthermore, the generation unit 15b generates the MTP file D that is the digital file that defines the function of each of the physical units 30. Furthermore, the generation unit 15b generates the MTP file D that includes the design information that defines the design of each of the modules that constructs the respective physical units 30, the operation information that defines the operating condition that enables each of the physical units 30 to operate, or the metadata that is connected with each of the physical units 30.

A specific example of the MTP file generation control process will be described. At a first step, the generation unit 15b generates, as the MTP file D associated with the modular plant PS identified by "PS001", the data of {physical unit: "PU101", MTP file: "MTP 101"}, {physical unit: "PU102", MTP file: "MTP 102"}, {physical unit: "PU103", MTP file: "MTP 103"}, ... and the like. At a second step, the generation unit 15b stores the generated MTP file D in the MTP file storage unit 14a.

### UUID generation control process

The generation unit 15b performs the UUID generation control process. For example, the generation unit 15b generates the identification information on each of the physical units 30. Furthermore, the generation unit 15b generates the UUID that is the identification information on each of the physical units 30.

A specific example of the UUID generation control process will be described. At a first step, the generation unit 15b generates, as the UUID related to the modular plant PS identified by "PS001", the data of {physical unit: "PU101", UUID: "UUID 101"}, {physical unit: "PU102", UUID: "UUID 102"}, {physical unit: "PU103", UUID: "UUID 103"}, ... and the like. At a second step, the generation unit 15b stores the generated UUID in the UUID storage unit 14b.

### NFT generation control process

The generation unit 15b performs the NFT generation control process. For example, the generation unit 15b adds the identification information on each of the elements included in the aggregate that is constituted by each of the elements to the digital file that defines the function of each of the elements. At this time, the generation unit 15b adds the identification information on each of the physical units 30 included in the modular plant PS to the digital file that defines the function of each of the physical units 30. Furthermore, the generation unit 15b adds the UUID that is the identification information on each of the physical units 30 to the digital file that defines the function of each of the physical units 30. Furthermore, the generation unit 15b generates the NFT by using the digital file in which the identification information on each of the physical units 30 has been added. Furthermore, the generation unit 15b generates the NFT by using the MTP file D that is the digital file in which the identification information on each of the physical units 30 has been added. Furthermore, the generation unit 15b generates the NFT by hashing the MTP file D in which the UUID of each of the physical units 30 has been added.

A specific example of the NFT generation control process will be described. At a first step, the generation unit 15b refers to, as the MTP file D stored in the MTP file storage unit 14a, the data of {physical unit: "PU101", MTP file: "MTP 101"}, {physical unit: "PU102", MTP file: "MTP 102"}, {physical unit: "PU103", MTP file: "MTP 103"}, ... and the like related to the modular plant PS identified by "PS001". At a second step, the generation unit 15b refers to, as the UUID stored in the UUID storage unit 14b, the data of {physical unit: "PU101", UUID: "UUID 101"}, {physical unit: "PU102", UUID: "UUID 102"}, {physical unit: "PU103", UUID: "UUID 103"}, ... and the like related to the modular plant PS identified by "PS001". At a third step, the generation unit 15b adds the UUID of each of the physical units 30 to the MTP file D, related to the modular plant PS identified by "PS001", and then, generates the data of {physical unit: "PU101", UUID: "UUID 101", MTP file: "MTP 101"}, {physical unit: "PU102", UUID: "UUID 102", MTP file: "MTP 102"}, {physical unit: "PU103", UUID: "UUID 103", MTP file: "MTP 103"}, ... and the like. At a fourth step, the generation unit 15b hashes the data in which the UUID has been added to the MTP file D associated with each of the physical units 30 related to the modular plant PS identified by "PS001", and then, generates, as the NFT, the data of {physical unit: "PU101", NFT: "NFT 101"}, {physical unit: "PU102", NFT: "NFT 102"}, {physical unit: "PU103", NFT: "NFT 103"}, ... and the like. At a fifth step, the generation unit 15b stores the generated NFT in the NFT storage unit 14c.

Furthermore, the generation unit 15b is also able to perform the NFT generation control process on the process data, in addition to the digital file, such as the MTP file D. For example, the generation unit 15b further adds the identification information to the process data that indicates a process characteristic of each of the physical units 30. At this time, the generation unit 15b generates the NFT by further adding the identification information to the process data that indicates the process characteristic, such as a chemical characteristic or a pressure, of each of the physical units 30.

Furthermore, the generation unit 15b is also able to perform NFT generation control process on an automobile, an aircraft, and a medical device as the aggregate that is constituted by each of the elements. For example, the generation unit 15b generates the NFT by adding the identification information on each of the automobile components included in the automobile that is constituted by each of the automobile components to the digital file that defines the function of each of the automobile components. Furthermore, the generation unit 15b generates the NFT by adding the identification information on each of the aircraft components included in the aircraft that is constituted by each of the aircraft components to the digital file that defines the function of each of the aircraft components. Furthermore, the generation unit 15b generates the NFT by adding the identification information on each of the medical device components included in the medical device that is constituted by each of the medical device components to the digital file that defines the function of each of the medical device components.

### 2-2-5-3. Registration unit 15c

The registration unit 15c registers various kinds of information. Moreover, the registration unit 15c may refer to the various kinds of information stored in the storage unit 14. In the following, the registration control process will be described.

### Registration control process

The registration unit 15c performs the registration control process. For example, the registration unit 15c registers the digital file to which the identification information on each of the physical units 30 included in the plant has been added in the distributed ledger that is able to be shared by the users of the plant. Here, the user of the plant includes a staff or the like who is present in a distant area that is away from each of the plants (e.g.: the head office of a corporation that possesses each of the plants), in addition to an operator, an engineer, a worker, and the like involving in each of the plants. Furthermore, the plant is, for example, the modular plant PS. Furthermore, the registration unit 15c registers the generated NFT in the blockchain as the distributed ledger. Furthermore, the registration unit 15c registers the NFT that has been generated by hashing the MTP file D in which the UUID of each of the physical units 30 has been added in the blockchain.

A specific example of the registration control process will be described. At a first step, the registration unit 15c refers to, as the NFT stored in the NFT storage unit 14c, the data of {physical unit: "PU101", NFT: "NFT 101"}, {physical unit: "PU102", NFT: "NFT 102"}, {physical unit: "PU103", NFT: "NFT 103"}, ... and the like related to the modular plant PS identified by "PS001". At a second step, the registration unit 15c registers, related to the modular plant PS identified by "PS001", the NFT that has been referred to in "BC001" that is the blockchain information stored in the blockchain database 20.

Furthermore, the registration unit 15c is also able to perform the registration control process on the process data, in addition to the digital file, such as the MTP file D. For example, the registration unit 15c further registers the process data to which the identification information has been added in the distributed ledger. At this time, the registration unit 15c further registers the process data that indicates the process characteristic, such as a chemical characteristic or a pressure, of each of the physical units 30 and to which the identification information has been added in the distributed ledger that is able to be shared by the users of the plant.

Furthermore, the registration unit 15c is also able to perform the registration control process on the automobile, the aircraft, and the medical device as the aggregate that is constituted by each of the elements. For example, the registration unit 15c registers the digital file to which the identification information has been added in the distributed ledger that is able to be shared by the users of the automobile. Here, the user of the automobile includes a staff who manufactures each of the automobiles, a staff who maintains each of the automobiles, a staff who manages each of the automobiles, and the like, in addition to a driver of each of the automobile, and the like. Furthermore, the registration unit 15c registers the digital file to which the identification information has been added in the distributed ledger that is able to be shared by the users of the aircraft. Here, the user of the aircraft includes a staff who manufactures each of the aircrafts, a staff who maintains each of the aircrafts, a staff who manages each of the aircrafts, and the like, in addition to a pilot of each of the aircrafts. Furthermore, the registration unit 15c registers the digital file to which the identification information has been added in the distributed ledger that is able to be shared by the users of the medical device. Here, the user of the medical device includes a staff who manufactures each of the medical devices, a staff who maintains each of the medical devices, a staff who manages each of the medical devices, and the like, in addition to a worker or the like of each of the medical devices.

### 2-2-5-4. Management unit 15d

The management unit 15d manages various kinds of information. Moreover, the management unit 15d may refer to various kinds of information stored in the storage unit 14. In the following, the data encryption process and the access control process will be described.

### Data encryption process

The management unit 15d performs the data encryption process. For example, the management unit 15d manages the digital file by encrypting the digital file by using a predetermined encryption algorithm. Furthermore, the management unit 15d manages the MTP file D that is the digital file by encrypting the MTP file D by using the predetermined encryption algorithm.

A specific example of the data encryption process will be described. At a first step, the management unit 15d refers to, as the MTP file D stored in the MTP file storage unit 14a, the data of {physical unit: "PU101", MTP file: "MTP 101"}, {physical unit: "PU102", MTP file: "MTP 102"}, {physical unit: "PU103", MTP file: "MTP 103"}, ... and the like related to the modular plant PS identified by "PS001". At a second step, the management unit 15d encrypts the MTP file D that is associated with each of the physical units 30 and that is related to the modular plant PS identified by "PS001", and then, generates, as the encrypted MTP file D', the data of {physical unit: "PU101", MTP file: "MTP 101' "}, {physical unit: "PU102", MTP file: "MTP 102' "}, {physical unit: "PU103", MTP file: "MTP 103' "}, ... and the like. At a third step, the management unit 15d stores the encrypted MTP file D' in the MTP file storage unit 14a.

Moreover, the management unit 15d is also able to encrypt the MTP file D that has been NFT-ized. Furthermore, the management unit 15d is also able to NFT-ize the encrypted MTP file D'. In addition, the management unit 15d is also able to encrypt the UUID.

### Access control process

The management unit 15d performs the access control process. For example, the management unit 15d manages the digital file such that only a predetermined user is able to access the digital file. Furthermore, the management unit 15d manages each of the physical units 30 such that only the predetermined user is able to access each of the physical units 30.

A specific example of the access control process will be described. At a first step, the management unit 15d sets, as the user who is able to access the MTP file D, the data of {access authority: "UID101", MTP file: "MTP 101"}, {access authority: "UID102", MTP file: "MTP 102"}, {access authority: "UID103", MTP file: "MTP 103"}, ... and the like related to the modular plant PS identified by "PS001". At a second step, in a case where an access request with respect to the MTP file D related to the modular plant PS identified by "PS001" is received, the management unit 15d performs user authentication. At a third step, the management unit 15d sets, as the user who is able to access the physical unit 30, the data of {access authority: "UID101, physical unit: "PU101"}, {access authority: "UID102, physical unit: "PU102"}, {access authority: "UID103, physical unit: "PU103"}, ... and the like related to the modular plant PS identified by "PS001". At a fourth step, in a case where an access request with respect to the physical unit 30 related to the modular plant PS identified by "PS001" is received, the management unit 15d performs user authentication.

### 2-3. Configuration example and process example related to blockchain database 20

A configuration example and a process example related to the blockchain database 20 will be described with reference to FIG. 6. FIG. 6 is a diagram illustrating one example of the blockchain database 20 according to the embodiment. In the example illustrated in FIG. 6, the blockchain database 20 includes items, such as a "plant" and "blockchain information". Moreover, the item of the "plant" is the same as that included in the MTP file storage unit 14a, and therefore, a description thereof will be omitted.

The "blockchain information" indicates the information that is related to the generated NFT and that has been registered in the blockchain. For example, the "blockchain information" is blockchain data of a private chain that has been set in each of the modular plants PS.

In other words, FIG. 6 illustrates an example in which the blockchain database 20 stores therein data that is indicated by {plant: "PS001", blockchain information: "BC001"}, {plant: "PS002", blockchain information: "BC002"}, {plant: "PS003", blockchain information: "BC003"}, ... and the like.

### 2-4. Configuration example and process example related to physical unit 30

A configuration example and a process example related to the physical unit 30 will be described with reference to FIG. 2 again. For example, the physical unit 30 includes the plurality of plant devices that are the elements that constitute the modular plant PS. Furthermore, the physical unit 30 is, for example, a plant facility, such as a reaction facility, a heating facility, a cooling facility, a molding facility, a cleaning facility, a mixing facility, a separation and purification facility, and a measurement facility. Furthermore, the plant device is, for example, the control device 30A (30-1A, 30-2A, and ... ), a communication device 30B (30-1B, 30-2B, and ... ), a field device 30C (30-1C, 30-2C, and ... ), or the like included in the physical unit 30 (30-1, 30-2, and ... ).

### 3. Specific example of each process performed in plant management system 100

A specific example of each of the processes performed in the plant management system 100 according to embodiment will be described. In the following, a specific example of a distributed ledger registration function, a specific example of a physical unit link function, a specific example of a security function, an example of the application of the plant management system 100, and an application example of the plant management system 100 will be described.

### 3-1. Specific example of distributed ledger registration function

The specific example of the distributed ledger registration function will be described. In the following, a UUID generation function, an MTP file generation function, an NFT generation function, and a blockchain registration function will be described.

### 3-1-1. UUID generation function

The plant management system 100 has the UUID generation function. The plant management system 100 generates a UUID that is unique to the physical unit 30. Furthermore, the plant management system 100 adds the generated UUID to the MTP file that is associated with the physical unit 30. Here, in the plant management system 100, the management server 10 may generate the UUID, or the control device 30A or a different device that is included in the physical unit 30 may generate the UUID, or an administrator of the plant management system 100 may generate the UUID.

### 3-1-2. MTP file generation function

The plant management system 100 has the MTP file generation function. The plant management system 100 generates the MTP file D that includes the
design information, the operation information, the metadata, and the like of the physical unit 30. Here, in the plant management system 100, the control device 30A or a different device that is included in the physical unit 30 may generate the MTP file D, or an administrator of the plant management system 100 may generate the MTP file D, or the management server 10 may generate the MTP file D.

### 3-1-3. NFT generation function

The plant management system 100 has the NFT generation function. The plant management system 100 adds the UUID to the MTP file D, and generates the NFT via the NFT-ized module. In other words, the UUID functions as an NFT identifier. Here, in the plant management system 100, the management server 10 generates the NFT, but a different device may generate the NFT. Moreover, the NFT generation function is able to be implemented by using a smart contract.

### 3-1-4. Blockchain registration function

The plant management system 100 has the blockchain registration function. The plant management system 100 guarantees uniqueness and authenticity of the MTP file D by registering the generated NFT in the blockchain by using the tampering prevention function. As a result of this, in the plant management system 100, the NFT is able to be referred to as invariant data. Here, in the plant management system 100, the management server 10 registers the NFT in the blockchain, but a different device may register the NFT in the blockchain. Moreover, the blockchain registration function may also be implemented by using a smart contract.

### 3-1-5. Others

The above described blockchain registration function is one example of the distributed ledger registration function, and is not limited to the blockchain. For example, the plant management system 100 may also be implemented by using a distributed ledger technology, such as a directed acyclic graph (DAG) or a hash graph (Hashgraph).

### 3-2. Specific example of physical unit link function

A specific example of the physical unit link function will be described. In the following, a physical unit identification function and an NFT link function will be described.

### 3-2-1. Physical unit identification function

The plant management system 100 has the physical unit identification function. The plant management system 100 generates the UUID that identifies the physical unit 30. Furthermore, the plant management system 100 links (associates) the physical unit 30 and the MTP file D by adding the generated UUID to the MTP file D that is associated with the physical unit 30. Here, in the plant management system 100, the management server 10 adds the UUID to the MTP file D, but a different device may also add the UUID to the MTP file D. Furthermore, the worker in the plant may identify the UUID by directly attaching the generated UUID that identifies the physical unit 30 to the physical unit 30 as a plate or a seal.

### 3-2-2. NFT link function

The plant management system 100 has the NFT link function. The plant management system 100 uses the UUID, and links the physical unit 30 to the NFT-ized MTP file D in the blockchain. As a result of this, in the plant management system 100, a tampering risk of the data of the physical unit 30 is reduced, and authenticity is guaranteed. Here, in the plant management system 100, the management server 10 links the physical unit 30 to the MTP file D, but a different device may link the physical unit 30 to the MTP file D.

### 3-3. Specific example of security function

A specific example of the security function will be described. In the following, an encryption function and an access control function will be described.

### 3-3-1. Encryption function

The plant management system 100 has the encryption function. The plant management system 100 protects all of the pieces of data included in the MTP file D and the NFT via the encryption module. For example, the plant management system 100 uses a strong encryption algorithm, such as the Advanced Encryption Standard 256 (AES-256), ensures consistency of the data, and protects the data against an unauthorized access. Here, in the plant management system 100, the management server 10 encrypts various kinds of data, but a different device may encrypt the various kinds of data.

### 3-3-2. Access control function

The plant management system 100 has the access control function. The plant management system 100 performs management such that only the user having specific authority is able to access the physical unit 30 and the MTP file. As a result of this, in the plant management system 100, a risk of data tampering or an unauthorized access from an outside is minimized. In addition, in the plant management system 100, it is also possible to address an internal security risk. Furthermore, in the plant management system 100, by particularly adopting a private chain among the blockchains, and by restricting an access to only the user having specific authority, it is possible to further improve the security. Here, in the plant management system 100, the management server 10 controls the access, but a different device may also control the access.

### 3-4. Example of the application of plant management system 100

An example of the application of the plant management system 100 will be described. In the following, an applicable product and a scope of application will be described.

### 3-4-1. Applicable product

As an example of the application of the plant management system 100, an applicable product will be described. The plant management system 100 is applicable to, in the manufacturing industry in general, a system that manages or verifies the MTP file D that is connected with the physical unit 30. For example, the plant management system 100 is widely used in the industries that is required to guarantee uniqueness and security for digital files associated with physical products, such as electronic devices, machine components, medical devices, consumer goods. In particular, the plant management system 100 is expected to be applied in the field in which high reliability is required, such as an automobile component or a precision machine.

### 3-4-2. Scope of application

As an example of the application of the plant management system 100, a scope of application will be described. The plant management system 100 is applicable to all of the digital files, such as design data on a product, information related to a manufacturing process, shipping information, sales information, and a maintenance history, that are linked to the physical unit 30, and a security measure to safely manage these digital files is implemented. Furthermore, the plant management system 100 is also used for production management and traceability of the physical unit 30, and plays an important role in terms of security.

### 3-5. Application example of plant management system 100

An application example of the plant management system 100 will be described. In the following, an applicable product and an application field will be described.

### 3-5-1. Applicable product

As the application example of the plant management system 100, the applicable product will be described. The plant management system 100 is applicable to the manufacturing field of electronic devices (e.g.: smartphones, home appliances, etc.), automobile components, medical devices (e.g.: artificial joints, surgical devices, etc.), and industrial devices. In addition, the plant management system 100 is also applicable to management of a digital file, such as a digital content, in which uniqueness and security is required.

### 3-5-2. Application field

As an application example of the plant management system 100, the application field will be described. The plant management system 100 is applicable to a construction method for a plant. For example, the plant management system 100 is applicable to a method for constructing a plant itself as a module unit, such as a modular plant construction method. The plant management system 100 is applicable to an automobile industry and an aviation industry. For example, the plant management system 100 reduces a risk of an illegal distribution or a fake product by enforcing security while ensuring authenticity and traceability of components at the time of manufacturing of an automobile component or an aircraft component. Furthermore, the plant management system 100 is applicable to a medical device. For example, the plant management system 100 records a tracking or a usage history of an artificial organ or an advanced medical device in a blockchain, and implements improvement in quality control and safety. In particular, it is highly important in a country or a region in which quality control of a medical device is strict and ensuring of security is essential. In addition, the plant management system 100 is applicable to a recycling industry. For example, the plant management system 100 is also applicable to verify the traceability and authenticity of discarded product or a recycle material in the final stage of the product life cycle, and contributes to ensuring sustainability. As a result of this, the plant management system 100 promotes environmental protection and product reuse, and contributes to the realization of a recycling-oriented society.

### 4. Flow of each process performed in plant management system 100

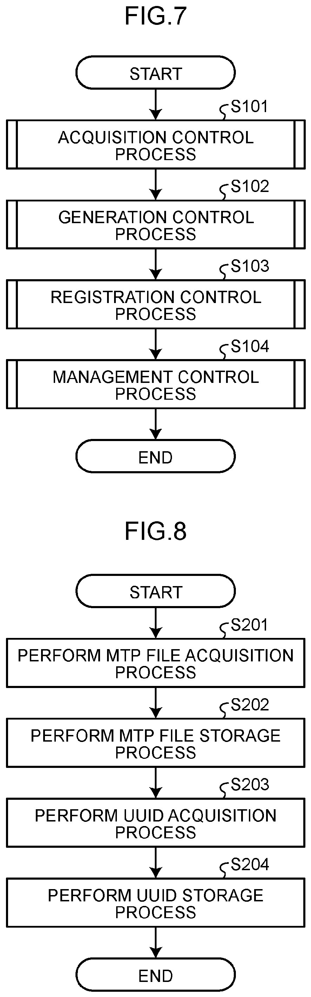

The flow of a process performed in the plant management system 100 according to the embodiment will be described with reference to FIG. 7 to FIG. 11. In the following, the overall flow of the process performed in the plant management system 100 will be described, and then, an acquisition control process, a generation control process, a registration control process, and a management control process will be described as each of the processes.

### 4-1. Overall process performed in plant management system 100

The flow of the overall process performed in the plant management system 100 according to the embodiment will be described with reference to FIG. 7. FIG. 7 is a flowchart illustrating one example of the flow of the overall process performed in the plant management system 100 according to the embodiment. Moreover, the processes performed at Steps S101 to S104 described below may be performed in different order. Furthermore, some of the processes performed at Steps S101 to S104 described below may be omitted.

### 4-1-1. Acquisition control process

At a first step, the plant management system 100 performs the acquisition control process (Step S101). For example, the plant management system 100 acquires the MTP file D or the UUID associated with the physical unit 30 by performing the processes at Steps S201 to S204 that will be described later.

### 4-1-2. Generation control process

At a second step, the plant management system 100 performs the generation control process (Step S102). For example, the plant management system 100 generates the NFT that is associated with the physical unit 30 by performing the processes at Steps S301 to S304 that will be described later.

### 4-1-3. Registration control process

At a third step, the plant management system 100 performs the registration control process (Step S103). For example, the plant management system 100 registers the generated NFT in the blockchain by performing the processes at Steps S401 to S402 that will be described later.

### 4-1-4. Management control process

At a fourth step, the plant management system 100 performs the management control process (Step S104), and ends the process. For example, the plant management system 100 manages the security of the modular plant PS by performing the processes at Steps S501 to S502 that will be described later.

### 4-2. Acquisition control process

The flow of the acquisition control process performed in the plant management system 100 according to the embodiment will be described with reference to FIG. 8. FIG. 8 is a flowchart illustrating one example of the flow of the acquisition control process performed in the plant management system 100 according to the embodiment. Moreover, the processes performed at Steps S201 to S204 described below may be performed in different order. Furthermore, some of the processes performed at Steps S201 to S204 described below may be omitted.

### 4-2-1. MTP file acquisition process

At a first step, the management server 10 performs the MTP file acquisition process (Step S201). For example, the management server 10 acquires the MTP file D that is associated with each of the physical units 30 and that constitutes the modular plant PS from the predetermined server. At this time, the management server 10 may also generate the MTP file D associated with each of the physical units 30.

### 4-2-2. MTP file storage process

At a second step, the management server 10 performs the MTP file storage process (Step S202). For example, the management server 10 stores the acquired MTP file D in the MTP file storage unit 14a for each of the physical units 30.

### 4-2-3. UUID acquisition process

At a third step, the management server 10 performs the UUID acquisition process (Step S203). For example, the management server 10 acquires the UUID that is associated with each of the physical units 30 and that constitutes the modular plant PS from the predetermined server. At this time, the management server 10 may generate the UUID that is associated with each of the physical units 30.

### 4-2-4. UUID storage process

At a fourth step, the management server 10 performs the UUID storage process (Step S204), and ends the acquisition control process. For example, the management server 10 stores the acquired UUID in the UUID storage unit 14b for each of the physical units 30.

### 4-3. Generation control process

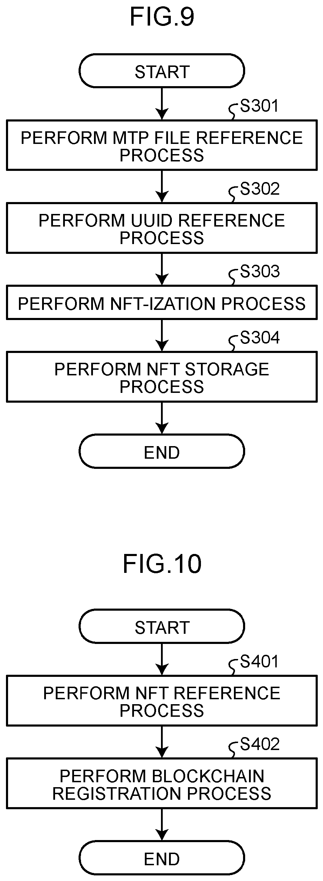

The flow of the generation control process performed in the plant management system 100 according to the embodiment will be described with reference to FIG. 9. FIG. 9 is a flowchart illustrating one example of the flow of the generation control process performed in the plant management system 100 according to the embodiment. Moreover, the processes performed at Steps S301 to S304 described below may be performed in different order. Furthermore, some of the processes performed at Steps S301 to S304 described below may be omitted.

### 4-3-1. MTP file reference process

At a first step, the management server 10 performs the MTP file reference process (Step S301). For example, the management server 10 refers to the MTP file D that is stored in the MTP file storage unit 14a.

### 4-3-2. UUID reference process

At a second step, the management server 10 performs the UUID reference process (Step S302). For example, the management server 10 refers to the UUID that is stored in the UUID storage unit 14b.

### 4-3-3. NFT-ization process

At a third step, the management server 10 performs the NFT-ization process (Step S303). For example, the management server 10 generates the NFT by adding the UUID associated with each of the physical units 30 to the associated MTP file D, and outputting the hash value.

### 4-3-4. NFT storage process

At a fourth step, the management server 10 performs the NFT storage process (Step S304), and ends the generation control process. For example, the management server 10 stores the generated NFT in the NFT storage unit 14c for each of the physical units 30.

### 4-4. Registration control process

The flow of the registration control process performed in the plant management system 100 according to the embodiment will be described with reference to FIG. 10. FIG. 10 is a flowchart illustrating one example of the flow of the registration control process performed in the plant management system 100 according to the embodiment. Moreover, the processes performed at Steps S401 and S402 described below may be performed in different order. Furthermore, some of the processes performed at Steps S401 and S402 described below may be omitted.

### 4-4-1. NFT reference process

At a first step, the management server 10 performs the NFT reference process (Step S401). For example, the management server 10 refers to the NFT that is stored in the NFT storage unit 14c.

### 4-4-2. Blockchain registration process

At a second step, the management server 10 performs the blockchain registration process (Step S402). For example, the management server 10 registers the NFT that has been referred to by the management server 10 in the blockchain that is stored in the blockchain database.

### 4-5. Management control process

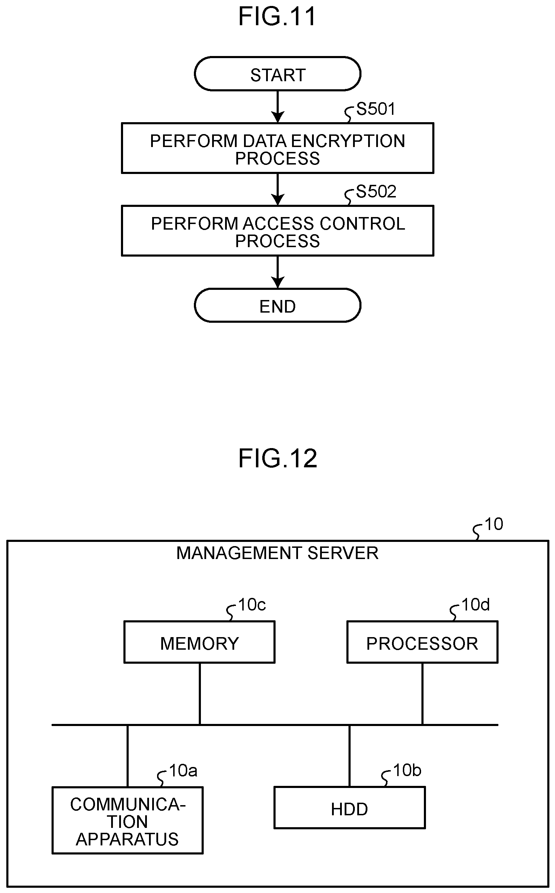

The flow of the management control process performed in the plant management system 100 according to the embodiment will be described with reference to FIG. 11. FIG. 11 is a flowchart illustrating one example of the flow of the management control process performed in the plant management system 100 according to the embodiment. Moreover, the processes performed at Steps S501 and S502 described below may be performed in different order. Furthermore, some of the processes performed at Steps S501 and S502 described below may be omitted.

### 4-5-1. Data encryption process

At a first step, the management server 10 performs the data encryption process (Step S501). For example, the management server 10 encrypts the MTP file D that is stored in the MTP file storage unit 14a. Furthermore, the management server 10 encrypts the UUID that is stored in the UUID storage unit 14b.

### 4-5-2. Access control process

At a second step, the management server 10 performs the access control process (Step S502), and ends the management control process. For example, the management server 10 performs access control such that only the user who has specific authority is able to access the physical unit 30 and the MTP file D.

### 5. Effect of embodiment

Effects of the embodiment will be described. In the following, a first to a fifteenth effects corresponding to the processes according to the embodiment will be described.

### 5-1. First effect

As a first effect, in the embodiment, the management server 10 adds identification information on each of the elements included in the aggregate that is constituted by each of the elements to the digital file that defines the function of each of the elements, and registers the digital file to which the identification information has been added in the distributed ledger that is able to be shared by the users of the aggregate. As a result of this, in the embodiment, it is possible to ensure the uniqueness and the security of each of the aggregates and the digital file, so that it is possible to improve the performance of the aggregate that is constituted by each of the elements.

### 5-2. Second effect

As a second effect, in the embodiment, the management server 10 adds the identification information on each of the physical units 30 included in the plant to the digital file that defines the function of each of the physical units 30, and registers the digital file to which the dentification information has been added in the distributed ledger that is able to be shared by the users. As a result of this, in the embodiment, it is possible to ensure the uniqueness and the security of each of the physical units 30 and the digital file, so that it is possible to improve the performance of the plant.

### 5-3. Third effect

As a third effect, in the embodiment, the management server 10 generates an NFT by using the digital file to which the identification information on each of the physical units 30 has been added, and registers the generated NFT in the blockchain as the distributed ledger. As a result of this, in the embodiment, it is possible to ensure the uniqueness and the security of each of the physical units 30 and the digital file by using the blockchain technology, so that it is possible to improve the performance of the plant.

### 5-4. Fourth effect

As a fourth effect, in the embodiment, the plant is the modular plant PS. As a result of this, in the embodiment, it is possible to ensure the uniqueness and the security of each of the physical units 30 and the digital files, so that it is possible to improve the performance of the modular plant PS.

### 5-5. Fifth effect

As a fifth effect, in the embodiment, the digital file is an MTP file. As a result of this, in the embodiment, it is possible to ensure the uniqueness and the security of each of the physical units 30 and the digital file by using the MTP technology, so that it is possible to improve the performance of the plant.

### 5-6. Sixth effect

As a sixth effect, in the embodiment, the MTP file includes the design information that defines a design of each of the modules that constructs the respective physical units 30, operation information that defines an operating condition that enables each of the physical units 30 to operate, or the metadata that is connected with each of the physical units 30. As a result of this, in the embodiment, it is possible to ensure the uniqueness and the security of each of the physical units 30 and the digital file by using the MTP file that defines the function of each of the modules, so that it is possible to improve the performance of the plant.

### 5-7. Seventh effect

As a seventh effect, in the embodiment, the management server 10 further adds the identification information to the process data that indicates a process characteristic of each of the physical units 30, and registers the digital file and the process data to each of which the identification information has been added in the distributed ledger. As a result of this, in the embodiment, it is possible to ensure the uniqueness and the security of each of the physical units 30 and the digital files, and, it is also possible to add the process characteristic, such as a chemical characteristic or a pressure, in addition to instrumentation information on the plant control system, so that it is possible to improve the performance of the plant.

### 5-8. Eighth effect

As an eighth effect, in the embodiment, the identification information on each of the physical units 30 is a UUID. As a result of this, in the embodiment, it is possible to ensure the uniqueness and the security of each of the physical units 30 and the digital file by using the UUID, so that it is possible to improve the performance of the plant.

### 5-9. Ninth effect

As a ninth effect, in the embodiment, the management server 10 generates the UUID of each of the physical units 30. As a result of this, in the embodiment, it is possible to ensure the uniqueness and the security of each of the physical units 30 and the digital file by using the UUID generated by the management server 10, so that it is possible to improve the performance of the plant.

### 5-10. Tenth effect

As a tenth effect, in the embodiment, the management server 10 manages the digital file by encrypting the digital file by using a predetermined encryption algorithm. As a result of this, in the embodiment, it is possible to protect the digital file associated with each of the physical units 30 by encryption, so that it is possible to improve the performance of the plant.

### 5-11. Eleventh effect

As an eleventh effect, in the embodiment, the management server 10 manages the digital file such that only a predetermined user is able to access the digital file. As a result of this, in the embodiment, it is possible to protect the digital file associated with each of the physical units 30 by an access restriction, so that it is possible to improve the performance of the plant.

### 5-12. Twelfth effect

As a twelfth effect, in the embodiment, the management server 10 acquires the digital file associated with manufacturing, maintenance, or a rearrangement of each of the physical units 30. As a result of this, in the embodiment, it is possible to track the entire life cycle of each of the physical units 30, so that it is possible to further improve the performance of the plant.

### 5-13. Thirteenth effect

As a thirteenth effect, in the embodiment, the management server 10 adds the identification information on each of the automobile components included in the automobile that is constituted by each of the automobile components to the digital file that defines the function of each of the automobile components, and registers the digital file to which the identification information has been added in the distributed ledger that is able to be shared by the users of the automobile. As a result of this, in the embodiment, it is possible to ensure the uniqueness and the security of each of the automobiles and the digital file, so that it is possible to improve the performance of the automobiles.

### 5-14. Fourteenth effect

As a fourteenth effect, in the embodiment, the management server 10 adds the identification information on each of the aircraft components included in the aircraft that is constituted by each of the aircraft components to the digital file that defines the function of each of the aircraft components, and registers the digital file to which the identification information has been added in the distributed ledger that is able to be shared by the users of the aircraft. As a result of this, in the embodiment, it is possible to ensure the uniqueness and the security of each of the aircrafts and the digital file, so that it is possible to improve the performance of the aircrafts.

### 5-15. Fifteenth effect

As a fifteenth effect, in the embodiment, the management server 10 adds identification information on each of the medical device components included in the medical device that is constituted by each of the medical device components to the digital file that defines the function of each of the medical device components, and registers the digital file to which the identification information has been added in the distributed ledger that is able to be shared by the users of the medical device. As a result of this, in the embodiment, it is possible to ensure the uniqueness and the security of each of the medical devices and the digital file, so that it is possible to improve the performance of the medical devices.

### 6. System

The flow of the processes, the control procedures, the specific names, and the information containing various kinds of data or parameters indicated in the above specification and drawings can be arbitrarily changed unless otherwise stated.

Furthermore, the components of each unit illustrated in the drawings are only for conceptually illustrating the functions thereof and are not always physically configured as illustrated in the drawings. In other words, the specific shape of a separate or integrated device is not limited to the drawings. Specifically, all or part of the device can be configured by functionally or physically separating or integrating any of the units depending on various loads or use conditions.

Furthermore, all or any part of each of the processing functions performed by each of the devices can be implemented by a CPU and by programs analyzed and executed by the CPU or implemented as hardware by wired logic.

### 7. Hardware

An example of a hardware configuration of the management server 10 will be described with reference to FIG. 12. Moreover, the other devices may also be constituted to have a similar hardware configuration. FIG. 12 is a diagram illustrating an example of a hardware configuration according to the embodiment. As illustrated in FIG. 12, the management server 10 includes a communication apparatus 10a, a hard disk drive (HDD) 10b, a memory 10c, and a processor 10d. Furthermore, each of the units illustrated in FIG. 12 is connected by a bus or the like with each other.

The communication apparatus 10a is implemented by a network interface card or the like, and performs communication with another server. The HDD 10b stores therein a database and a program that causes the functions illustrated in FIG. 2 to operate.

The processor 10d operates the process that executes each of the functions described above in FIG. 2 or the like by reading the program that executes the same processes as those performed by each of the processing units illustrated in FIG. 2 from the HDD 10b or the like and loading the read program in the memory 10c. For example, the process executes the same functions as those performed by each of the processing units included in the management server 10. Specifically, the processor 10d reads, from the **HDD** 10b or the like, the program having the same functions as those performed by the acquisition unit 15a, the generation unit 15b, the registration unit 15c, the management unit 15d, and the like. Then, the processor 10d executes the same processes as those performed by the acquisition unit 15a, the generation unit 15b, the registration unit 15c, the management unit 15d, and the like.

As described above, the management server 10 operates as a device that executes various processing methods by reading and executing the program according to the embodiment. Furthermore, the management server 10 is also able to implement the same functions as those described above in the embodiment by reading the above described program from a recording medium by a medium reading device and executing the read program. Moreover, the program according to embodiment need not always be executed by the management server 10. For example, the present disclosure may also be similarly applied to a case in which another computer or another server executes the program or in a case in which another computer and another server cooperatively execute the program with each other.

The program according to the embodiment may be distributed via a network, such as the Internet. Furthermore, the program may be executed by being recorded in a computer readable medium, such as a hard disk, a flexible disk (FD), a CD-ROM, a magneto-optical disk (MO), or a digital versatile disk (DVD), and being read from the recording medium by the computer.

According to the present disclosure, an advantage is provided in that it is possible to improve the performance of an aggregate that is constituted by each element.

## Claims

1. A management apparatus (10) comprising a processor, wherein
the processor is configured to execute a process of
adding identification information on each element (30) included in an aggregate that is constituted by each of the elements (30) to a digital file that defines a function of each of the elements (30), and
registering the digital file to which the identification information has been added in a distributed ledger (20) that is able to be shared by users of the aggregate.

2. The management apparatus (10) according to claim 1, wherein
the processor is configured to execute a process of
adding the identification information on each physical unit included in a plant to the digital file that defines the function of each of the physical units, and
registering the digital file to which the identification information has been added in the distributed ledger (20) that is able to be shared by the users of the plant.

3. The management apparatus (10) according to claim 2, wherein
the processor is configured to execute a process of
generating a non-fungible token by using the digital file to which the identification information on each of the physical units has been added, and
registering the generated non-fungible token on a blockchain that serves as the distributed ledger (20).

4. The management apparatus (10) according to claim 2 or 3, wherein the plant is a modular plant.

5. The management apparatus (10) according to any one of claims 2 to 4, wherein the digital file is a module type package file.

6. The management apparatus (10) according to claim 5, wherein the module type package file includes design information that defines a design of each module that constructs the respective physical units, operation information that defines an operating condition that enables each of the physical units to operate, or metadata that is associated with each of the physical units.

7. The management apparatus (10) according to any one of claims 2 to 6, wherein
the processor is configured to execute a process of
further adding the identification information to process data that indicates a process characteristic of each of the physical units, and
registering the digital file and the process data to each of which the identification information has been added in the distributed ledger.

8. The management apparatus (10) according to any one of claims 2 to 7, wherein the identification information on each of the physical units is a globally unique identifier.

9. The management apparatus (10) according to claim 8, wherein the processor is configured to execute a process of generating the globally unique identifier of each of the physical units.

10. The management apparatus (10) according to any one of claims 1 to 9, wherein the processor is configured to execute a process of managing the digital file by encrypting the digital file by using a predetermined encryption algorithm.

11. The management apparatus (10) according to any one of claims 1 to 10, wherein the processor is configured to execute a process of managing the digital file such that only one or more predetermined users are able to access the digital file.

12. The management apparatus (10) according to any one of claims 2 to 9, wherein the processor is configured to execute a process of acquiring the digital file associated with manufacturing, maintenance, or a rearrangement of each of the physical units.

13. The management apparatus (10) according to claim 1, wherein
the processor is configured to execute a process of
adding the identification information on each automobile component included in an automobile that is constituted by each of the automobile components to the digital file that defines the function of each of the automobile components, and
registering the digital file to which the identification information has been added in the distributed ledger that is able to be shared by the users of the automobile.

14. The management apparatus (10) according to claim 1, wherein
the processor is configured to execute a process of
adding the identification information on each aircraft component included in an aircraft that is constituted by each of the aircraft components to the digital file that defines the function of each of the aircraft components, and
registering the digital file to which the identification information has been added in the distributed ledger that is able to be shared by the users of the aircraft.

15. The management apparatus (10) according to claim 1, wherein
the processor is configured to execute a process of
adding the identification information on each medical device component included in a medical device that is constituted by each of the medical device components to the digital file that defines the function of each of the medical device components, and
registering the digital file to which the identification information has been added in the distributed ledger that is able to be shared by the users of the medical device.

16. A management method that causes a computer (10) to execute a process comprising:
adding identification information on each element (30) included in an aggregate that is constituted by each of the elements (30) to a digital file that defines a function of each of the elements (30), and
registering the digital file to which the identification information has been added in a distributed ledger (20) that is able to be shared by users of the aggregate.

17. A management program that causes a computer (10) to execute a process comprising:
adding identification information on each element (30) included in an aggregate that is constituted by each of the elements (30) to a digital file that defines a function of each of the elements (30), and
registering the digital file to which the identification information has been added in a distributed ledger (20) that is able to be shared by users of the aggregate.
